# EUROPÄISCHE PATENTSCHRIFT

(11) **EP 2 999 574 B1**
(45) Veröffentlichungstag und Bekanntmachung des Hinweises auf die Patenterteilung: **21.06.2017**
(21) Anmeldenummer: 14711730.3
(22) Anmeldetag: 17.03.2014
(51) Int. Cl.: B25J 9/16

(54) **SICHERHEITSÜBERWACHUNG EINER SERIELLEN KINEMATIK**
SAFETY MONITORING SYSTEM OF A SERIAL KINEMATIC SYSTEM
SURVEILLANCE DE SÉCURITÉ D'UNE CINÉMATIQUE SÉRIE

(30) Priorität: 22.05.2013 AT 503482013
(43) Veröffentlichungstag der Anmeldung: 30.03.2016
(73) Patentinhaber: Bernecker+Rainer Industrie-Elektronik Gesellschaft MbH, 5142 Eggelsberg (AT)
(72) Erfinder: DIRSCHLMAYR, Thomas, A-5020 Salzburg (AT); KAPELLER, Thomas, A-5300 Hallwang (AT)
(74) Vertreter: Patentanwälte Pinter & Weiss OG
(86) Internationale Anmeldenummer: PCT/EP2014/055243
(87) Internationale Veröffentlichungsnummer: WO 2014/187590

(56) Entgegenhaltungen:
- WO-A2-99/29474
- DE-A1-102005 061 618
- US-A- 4 718 078

## Beschreibung

Die Erfindung betrifft ein Verfahren zur Sicherheitsüberwachung und eine Sicherheitsüberwachung eines Gelenks einer seriellen Kinematik die unter Kontrolle einer Steuerung Aufgaben verrichtet, wobei zur Sicherheitsüberwachung aus der aktuellen Achsposition des Gelenks eine aktuelle Zustandsgröße des Gelenks, wie die Absolutposition oder ihre Ableitungen nach der Zeit, zyklisch ermittelt und mit einem konfigurierbaren Grenzwert verglichen wird, wobei ein Funktionsbaustein für die Überwachung der Zustandsgröße verwendet wird und in der Sicherheitsüberwachung die aktuelle Achsposition des Gelenks der seriellen Kinematik unabhängig von ihrer Steuerung erfasst und daraus eine aktuelle Zustandsgröße des Gelenks in der Sicherheitsüberwachung berechnet wird, die aktuelle Zustandsgröße des Gelenks mit ihrem Grenzwert verglichen wird und das Vergleichsergebnis von der Sicherheitsüberwachung ausgegeben wird.

Manipulatoren, Aktuatoren und Bewegungsautomaten mit mehreren Achsen, wie serielle Kinematiken, die allumfassend auch als Roboter bezeichnet werden, bringen immer ein Gefahrenpotential für Bedienpersonal mit sich. Die dadurch entstehenden Risiken können oftmals durch bauliche Maßnahmen reduziert werden, wobei in jedem Fall ein Restrisiko bestehen bleibt. In der Regel werden deshalb sicherheitsrelevante Kenngrößen bewertet und die serielle Kinematik stillgelegt oder für die Bewegung freigegeben. Bei seriellen Kinematiken erfolgt die Überwachung üblicherweise durch den Vergleich von Zustandsgrößen, wobei die Istwerte der Zustandsgrößen in der Steuerung der seriellen Kinematik mit vorgegebenen Sollwerten verglichen werden. Diese Zustandsgrößen können dabei beispielsweise einen Winkel, der die Orientierung eines Werkzeuges in einer Arbeitsebene bestimmt, oder auch kartesische Koordinaten, die die Lage eines Referenzpunktes beschreiben, umfassen. Des Weiteren erfolgt in den meisten Fällen eine Überwachung bezüglich des Toleranzbereichs, innerhalb dessen die serielle Kinematik operieren kann, ohne mit Personal oder technischen Einrichtungen in räumlichen Konflikt zu treten. Dies wird in vielfacher Weise durch physisches Absperren, also dem Anordnen der serielle Kinematik innerhalb einer geschlossenen Bearbeitungszelle erreicht. Im Gegensatz dazu etablieren sich infolge des zunehmenden Interagierens von Mensch und Maschine auch zunehmend optische Überwachungseinrichtungen zur Überwachung eines zulässigen Arbeitsbereichs der seriellen Kinematik.

Im Zusammenhang mit der Überwachung einer seriellen Kinematik, zeigt die DE 10 2007 037 078 A1 ein Verfahren zur Einhaltung von Arbeitsraumgrenzen während der Bewegung der seriellen Kinematik innerhalb eines definierten Arbeitsraumes beziehungsweise einer definierten Grenzzone. Dabei können posen- und positionsabhängige, beziehungsweise situationsabhängige, Anhaltepunkte/Abschaltpunkte realisiert werden. Die Anhaltebewegung wird vorab, in Abhängigkeit von bestimmten physikalischen Größen, wie beispielsweise Masse des Arbeitsmittels, bestimmt und in einem Speicher der Kinematiksteuerung in Form einer mehrdimensionalen Tabelle abgelegt. Die Steuerung kann während des Betriebs auf diese Werte zugreifen und in Abhängigkeit der gemessenen aktuellen Größen der Tabelle einen Bremsweg entnehmen, wodurch ein bevorstehendes Verletzen der Grenzzone erkannt und ein rechtzeitiges Stillsetzten der seriellen Kinematik realisiert wird. Dies erfordert natürlich eine umfangreiche und zeitintensive Vorbereitung in Bezug auf das Erstellen der benötigten Tabelle, in welcher sämtliche mögliche Anhaltebewegungen erfasst werden müssen. Diese in der Steuerung der seriellen Kinematik integrierte Tabelle, ist selbstverständlich nur für eine bestimmte Ausführung der Kinematik gültig. Würde die Kinematik beispielsweise um ein Gelenk ergänzt werden, ergibt sich dadurch eine Fülle an neuen Anhaltebewegungen die entsprechend vorausschauend in die Tabelle aufgenommen werden müssen, was entsprechend aufwendig ist.

Eine weitere, in verschiedenen Ausführungsvarianten bekannte Schutzeinrichtung zur Überwachung des Arbeitsbereichs einer seriellen Kinematik, stellt die optische Überwachung mittels Kameras dar. Die DE 102 51 584 A1 zeigt dabei eine Realisierung, bei der eine objektfreie Schutzzone mittels einer Kamera, die eine Rechnereinheit beinhaltet, aufgenommen wird und diese Aufnahme als Referenzhintergrund dient. Dieser Referenzhintergrund wird dabei auf seine Inhomogenität überprüft, die ein gewisses Maß nicht unterschreiten darf, um als gültig klassifiziert zu werden. Diese Vorgangsweise erlaubt, im Betrieb auch homogene, insbesondere einfarbige Gegenstände, innerhalb der Schutzzone als sicherheitskritische Objekte sicher zu erfassen. Das Arbeitsmittel, wie beispielsweise eine serielle Kinematik, kann über einen Schaltausgang der Kamera-Rechnereinheit nur dann in Betrieb gesetzt werden, wenn ein entsprechender Referenzhintergrund "eingelernt", die Objekterfassung freigegeben und kein sicherheitskritisches Objekt in der Schutzzone erkannt wird. Dies setzt für den Betrieb jedoch voraus, dass das Überwachungssystem, in Form der Kamera und ihrer Rechnereinheit, durchgehend aktiviert ist. Des Weiteren werden Schutzeinrichtungen dieser Ausführungsweise in der Regel ausschließlich zur Arbeitsraumüberwachung und der damit verbundenen Kollisionsüberwachung eingesetzt.

Die DE 10 2008 021 671 A1 zeigt ein Verfahren für die Überwachung eines Manipulators wobei neben der Position auch weitere Ableitungen der Position nach der Zeit, wie Geschwindigkeiten und Beschleunigungen, überwacht werden können. Grundsätzlich wird ein Verfahren beschrieben, bei dem beim Stillsetzen des Manipulators infolge einer nicht mehr erfüllten Sicherheitsfunktion zwischen den Gründen für die Sicherheitsverletzung unterschieden wird. Aus dieser Differenzierung ergeben sich unterschiedliche Szenarien für die Stillsetzung des Manipulators, wodurch beispielsweise ein schnelleres und/oder bahnnäheres Bremsen ermöglicht wird und ein aufwendiges "Zurückpositionieren" entfällt oder zumindest der notwendige Aufwand reduziert wird. Als Position wird dabei die Stellung der Gelenke des Manipulators und in diesem Zusammenhang die Lage und/oder Orientierung der einzelnen Glieder des Manipulators bezeichnet. Aus dieser Position werden in der Steuerung des Manipulators Geschwindigkeiten und Beschleunigungen errechnet, die entsprechend überwacht werden können. Da die Arbeitsraumüberwachung, also die Überwachung eines Arbeits- bzw. Schutzbereichs des Manipulators, einerseits durch Detektionseinrichtungen unter Nutzung von beispielsweise Infrarotlicht, elektromagnetischer Strahlung, Radarstrahlung und dgl., andererseits durch mögliche Überwachung von beispielsweise Zugangstüren erfolgt, ist eine Reihe von zusätzlichen Einrichtungen, die die Anschaffungskosten und den Erhaltungsbeziehungsweise Wartungsaufwand erhöhen, notwendig. Ein weiterer Nachteil der beschriebenen Ausführung ist, dass die Sicherheitsfunktionsüberwachung, bei Nichterfüllung einer oder mehrere Grenzwerte, den Manipulator in jedem Fall stillsetzt.

Die WO 99/29474 zeigt die Sicherheitsüberwachung eines Handhabungsgeräts bei welchem Steuereinheit und Sicherheitsüberwachung voneinander getrennt ausgeführt sind. Dabei ist jedoch vorgesehen, das die Sicherheitsüberwachung ein Freigabesignal an die Steuereinheit übermittelt und nur in diesem Fall vom Handhabungsgerät eine Aktion gesetzt werden kann. Aus diesem Grund muss die Sicherheitsüberwachung während des gesamten Betriebs des Handhabungsgerätes aktiviert sein.

Aufgabe der vorliegenden Erfindung ist es daher, eine Sicherheitsüberwachung der eingangs genannten Art so auszuführen, dass nicht unbedingt alle überwachbaren Zustandsgrößen auch wirklich ständig überwacht werden und, dass eine Nichteinhaltung eines oder mehrerer Grenzwerte nicht zwangsläufig zu einer Stillsetzung der seriellen Kinematik führt. Des Weiteren soll ein möglichst universelles Anwenden auf unterschiedliche serielle Kinematiken, bei geringem Vorbereitungsaufwand und dennoch breiten Überwachungsmöglichkeiten realisierbar sein, und der Bedarf an Überwachungssensorik, wie Kamerasysteme, Laserscanner, Ultraschallsensoren und dergleichen, minimiert werden.

Diese Aufgabe wird gemäß der vorliegenden Erfindung durch ein Verfahren und eine Sicherheitsüberwachung dadurch gelöst, dass der Funktionsbaustein unabhängig von der Steuerung und bedarfsweise aktiviert wird.

Dies ermöglicht, dass unabhängig von der Steuerung der seriellen Kinematik, frei entschieden werden kann, welche Zustandsgrößen wann überwacht werden und zu welchem Ereignis die Nichteinhaltung eines oder mehrerer Grenzwerte führt. Ein Eingriff in die Steuerung der seriellen Kinematik und/oder die Ausgabe eines optischen und/oder akustischen Signals, wie auch das Aktivieren einer möglicherweise bereits im Gelenkmotor vorhandene Sicherheitsfunktion wäre denkbar, ist jedoch nicht zwingend. Damit kann die Sicherheitsüberwachung parallel und unabhängig von der Steuerung der seriellen Kinematik betrieben werden.

Diese Unabhängigkeit von der Steuerung der seriellen Kinematik erlaubt es, die Sicherheitsüberwachung an unterschiedlichste Aufgabenbereiche und Kinematiken schnell und einfach, bei geringem Vorbereitungsaufwand anpassen zu können.

Neben der Berechnung der Rotationsmatrize eines Gelenks wird in einem Berechnungsbaustein aus dem Positionsfeedback des Gelenksmotors, das unabhängig von der Steuerung der seriellen Kinematik erfasst wird, die Absolutposition des Gelenks berechnet. Es wird also als aktuelle Achsposition das Positionsfeedback eines Gelenksmotors verwendet.

Da üblicherweise jede serielle Kinematik über Gelenksmotoren mit entsprechenden Positionsfeedback verfügt, kann die Sicherheitsüberwachung in dieser vorteilhaften Ausgestaltung, direkt auf das Positionsfeedback der Gelenksmotoren zugreifen und die Absolutposition unabhängig von der Steuerung der seriellen Kinematik berechnen. Dadurch ergibt sich der Vorteil, dass keine zusätzliche Sensorik für das Betreiben der Sicherheitsüberwachung notwendig ist.

Vorzugsweise erfolgt die Parametrierung von, die serielle Kinematik umfassenden Gelenken und deren starren Verbindungen, die in Summe eine seriellen Kinematik bilden für die die Sicherheitsüberwachung angewendet werden soll, wobei auch die Werkzeugabmessungen berücksichtigt werden. Ein Werkzeug mit einem Werkzeugarbeitspunkt, das von der seriellen Kinematik geführt wird, wird von der Sicherheitsüberwachung wie ein Gelenk behandelt und kann somit auch überwacht werden. Dennoch werden in der weiteren Beschreibung das Werkzeug und der Werkzeugarbeitspunkt als solche bezeichnet, um die Zusammenhänge verständlicher darlegen zu können. Für die Parametrierung wird die Geometrie der seriellen Kinematik, vorteilhaft durch außerhalb der Sicherheitsüberwachung erstellte und an die Sicherheitsüberwachung übergebene Tabellen, definiert. Dies erlaubt ein schnelles Anpassen der Sicherheitsüberwachung an unterschiedliche Ausführungen der seriellen Kinematik.

Da mehrere Zustandsgrößen eines Gelenks durch Funktionsbausteine überwacht werden können, wobei jeder Zustandsgröße ein Funktionsbaustein zugeordnet wird und die Funktionsbausteine unabhängig voneinander aktiviert oder deaktiviert werden können, beispielsweise über einen aktivier/deaktivierbaren Eingang, kann beispielsweise vom Benutzer, einer übergeordneten Regeleinheit oder dergleichen, bestimmt werden, welche Zustandsgrößen bedarfsweise überwacht werden sollen. Zur Aktivierung und Deaktivierung der Funktionsbausteine steht jedem Funktionsbaustein ein eigener Aktiviereingang zur Verfügung, der je nach Bedarf genutzt werden kann. Für die Überwachung einer Zustandsgröße kann der entsprechende Funktionsbaustein über einen Aktiviereingang aktiviert werden.

Somit kann für ein Gelenk die Überwachung verschiedener Zustandsgrößen, bezüglich frei wählbarer Grenzwerte, auch während des Bewegungsablaufs, unabhängig voneinander und unabhängig von der Steuerung der seriellen Kinematik, beispielsweise vom Benutzer, einer übergeordneten Regeleinheit oder dergleichen beliebig aktiviert oder deaktiviert werden. Dadurch erhöht sich die Anpassungsfähigkeit der Sicherheitsüberwachung an unterschiedliche Überwachungsbedürfnisse in hohem Maße.

Eine weitere vorteilhafte Ausgestaltung der Erfindung sieht vor, dass für die Arbeitsumgebung der seriellen Kinematik mehrere Teilbereiche für die Überwachung von Zustandsgrößen definiert werden. Diese unterteilen die, für die Gelenke, deren starren Verbindungen und dem Werkzeug, erreichbare Arbeitsumgebung und können sich, je nach Anwendung, Aufgabe und verwendeten Werkzeug unterscheiden. Der Vorteil besteht darin, dass bei unterschiedlichen, durch die serielle Kinematik verrichteten Aufgaben, beispielsweise Bereiche, in denen sich die serielle Kinematik nicht bewegen darf, schnell und mit geringem Aufwand definieren lassen.

Eine andere erfindungsgemäße Ausführung sieht vor, dass mit definierten Logikbausteinen, Grenzwerte für die zu überwachenden Zustandsgrößen in Abhängigkeit der Teilbereiche angepasst werden können. Beispielsweise kann abhängig vom Teilbereich, indem sich das Gelenk befindet, ein frei definierbarer Logikbaustein die zulässige Grenzgeschwindigkeit und den Sicherheitsgrenzwinkel anpassen.

Der Vorteil besteht darin, dass wenn sich ein Gelenk oder das Werkzeug beispielsweise in einem, dem Werkstück näherem, Teilbereich befindet, eine geringere Grenzgeschwindigkeit gewählt werden kann, als in einem weniger "kollisionskritischen" Teilbereich, wobei die jeweilige Grenzgeschwindigkeit dann, also beim Eintreten des Gelenks oder des Werkzeuges in den jeweiligen Teilbereich, für jedes Gelenk und Hilfskoordinatensystem der seriellen Kinematik gilt.

Des Weiteren kann bei der Aktivierung eines Funktionsbausteins unter Nutzung eines Anforderungseingangs zwischen unterschiedlichen Grenzwerten für die zu überwachende Zustandsgröße ausgewählt werden. Dies erlaubt es eine Zustandsgröße bedarfsweise auf unterschiedliche Grenzwerte zu beschränken. Je nach aktivierten Funktionsbaustein, und gewählten Grenzwert, kann eine gewisse Grenzgeschwindigkeit, die dann für jedes Gelenk und daher auch für das Werkzeug der seriellen Kinematik gilt, eine gewisse Absolutposition beziehungsweise Lage jedes Gelenks in der Arbeitsumgebung der seriellen Kinematik und eine Orientierung des Werkzeuges, auf einen vorgegebenen, "sicheren" Wert beziehungsweise auf einen "sicheren" Bereich eingeschränkt werden. Dieser "sichere" Wert/Bereich kann frei gewählt werden, ist jedoch vorzugsweise nur änderbar wenn der Funktionsbaustein deaktiviert ist.

Eine vorteilhafte Ausgestaltung der Erfindung sieht vor, dass mehrere Gelenke der seriellen Kinematik gleichzeitig überwacht werden können. Dies erlaubt eine möglichst gezielte Sicherheitsüberwachung einzelner Gelenke, oder auch der gesamten seriellen Kinematik und einem zugehörigen Werkzeug.

Die gegenständliche Erfindung wird nachfolgend unter Bezugnahme auf die Figuren 1 bis 10 erläutert, die beispielhaft, schematisch und nicht einschränkend eine vorteilhafte Ausgestaltung der Erfindung zeigen. Dabei zeigt
Fig.1 eine serielle Kinematik
Fig.2 die Arbeitsumgebung der seriellen Kinematik mit ihren Teilbereichen
Fig.3 ein erfindungsgemäßes Schema der Sicherheitsüberwachung für ein Gelenk einer seriellen Kinematik
Fig.4 ein erfindungsgemäßes Schema der Sicherheitsüberwachung in einer vorteilhafteren Ausgestaltung
Fig.5 ein erfindungsgemäßes Schema der Sicherheitsüberwachung in einem besonders vorteilhaften Umfang
Fig.6 ein weiteres erfindungsgemäßes Schema der Sicherheitsüberwachung in einem besonders vorteilhaften Umfang, in welchem weiters frei definierte Logikbausteine beinhaltet sind
Fig.7 den Zusammenhang zwischen Sicherheitsgrenzwinkel, Werkzeugrichtungsvektor und dem globalen Richtungsvektor der Werkzeugaufnahme Fig.8 eine perspektivische Ansicht eines Aufnahmewerkzeuges
Fig.9 die Ansicht des in Fig.8 dargestellten Aufnahmewerkzeuges aus Richtung IX
Fig.10 die Ansicht des in Fig.8 dargestellten Aufnahmewerkzeuges aus Richtung X

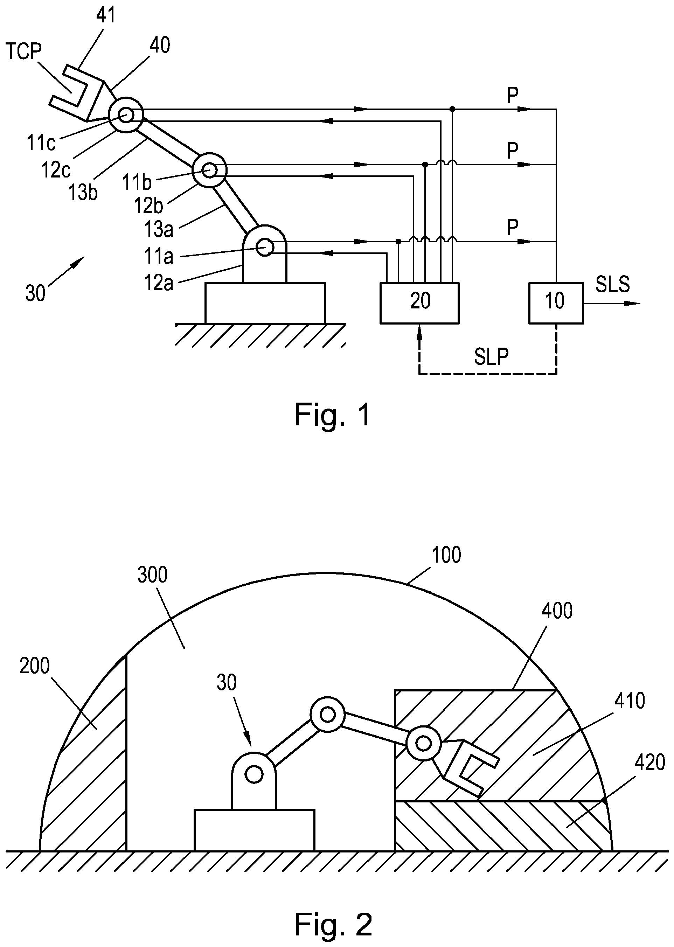

Fig.1 zeigt den schematischen Aufbau einer seriellen Kinematik 30 welche Gelenke 12a bis 12c oder mehr, und deren Geleksmotoren 11 a bis 11 c, oder entsprechend der Gelenke 12 auch mehr, starre Verbindungen 13a, 13b zwischen den Gelenken 12, einem Werkzeugaufnahmeflansch 40, einem Werkzeug 41 und eine zugehörige Steuerung 20 umfasst. Weiters ist die eingebundene Sicherheitsüberwachung 10 für die Überwachung der Zustandsgrößen schematisch dargestellt. Die zu überwachenden Zustandsgrößen der seriellen Kinematik 30 können beispielsweise die Geschwindigkeit (**S**afely **L**imited **S**peed, SLS), die Absolutposition (**S**afely **L**imited **P**osition, SLP) und die Werkzeugorientierung (**S**afely **L**imited **O**rientation, SLO) umfassen.

Beispielsweise sind SLS und SLP als, von der Sicherheitsüberwachung 10 ausgegebene, Status dargestellt. Es ist erfindungsgemäß frei überlassen, wie ein von der Sicherheitsüberwachung ausgegebener Status weiterverarbeitet wird. Beispielsweise kann ein Status an die Steuerung 20 der seriellen Kinematik 30, die unabhängig von der Sicherheitsüberwachungsfunktion arbeitet, übermittelt werden (für SLP strichliert dargestellt), um beispielsweise die serielle Kinematik 30 zum Stillstand zu bringen. Der Status könnte alternativ auch dazu genutzt werden, ein optisches und/oder akustisches Signal auszulösen oder eine mögliche, integrierte Sicherheitsfunktion des Gelenksmotors 11 direkt zu aktivieren, wobei auch eine Reihe anderer Möglichkeiten denkbar wären.

Der Werkzeugaufnahmeflansch 40 und der Werkzeugarbeitspunkt (**T**ool **C**enter **P**oint, TCP) des Werkzeuges 41 werden von Seiten der Sicherheitsüberwachung 10 wie ein Gelenk 12 behandelt. Dies führt dazu, dass die Sicherheitsüberwachung 10 sowohl auch das Werkzeug 41 selbst, als auch den Werkzeugarbeitspunkt TCP umfassen kann.

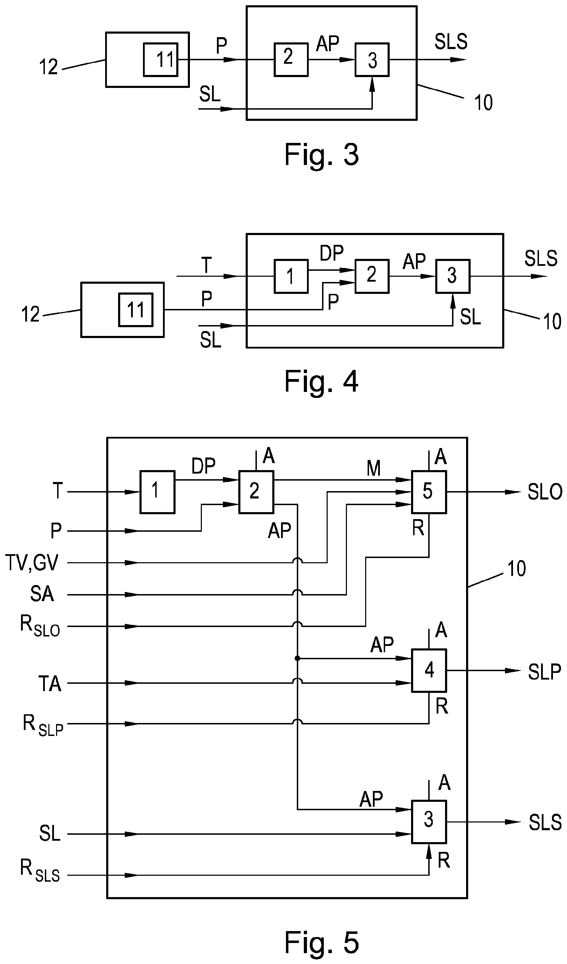

In Fig.3 ist die Sicherheitsüberwachung 10 mit einem Berechnungsbaustein 2 und einem Funktionsbausteinen 3 dargestellt, wobei der Berechnungsbaustein 2 auch im Funktionsbaustein 3 integriert sein könnte. Ausgehend von einer Referenzposition der Gelenke 12, in der der Verdrehwinkel (Drehgelenk) und/oder die Linearpositionen (Schubgelenk) der Gelenksachse auf Null gesetzt ist, stellt die aktuelle Achsposition P die relative Position (Verdrehung, Verschiebung) der Gelenksachse bezüglich ihrer Referenzposition dar und ist daher als Relativwert anzusehen. Die aktuelle Achsposition P wird zum Beispiel aus dem Positionsfeedback des dem Gelenk 12 zugehörigen Gelenksmotors 11 ermittelt und wird in den Berechnungsbaustein 2 eingelesen, wobei natürlich auch andere Möglichkeiten der Positionsermittlung denkbar sind. Die aktuelle Achsposition P des Gelenksmotors 11 wird dabei unabhängig von der Steuerung 20 der seriellen Kinematik 30 erfasst.

Aus der aktuellen Achsposition P wird durch den Berechnungsbaustein 2, mit Hilfe von an sich bekannten, mathematischen Methoden, beispielsweise unter Anwendung der Vorwärtstransformation, die Absolutposition AP des zu überwachenden Gelenks 12 berechnet und an den Funktionsbaustein 3 übermittelt. Der Funktionsbaustein 3 berechnet aus der übermittelten Absolutposition AP des Gelenks 12 beispielsweise als Zustandsgröße dessen Geschwindigkeit und vergleicht diese mit einer, beispielsweise vom Benutzer, einer übergeordneten Regeleinheit oder dergleichen, vorgegebenen Grenzgeschwindigkeit SL.

Als Ausgang liefert der Funktionsbaustein 3 das Vergleichsergebnis in Form eines Status SLS. Bei diesem Status SLS handelt es sich beispielsweise um einen boolschen Ausgang, der eine Überschreitung eines Grenzwertes beispielsweise in Form von SAFEFALSE "0" oder bei keiner Überschreitung in Form von SAFETRUE "1" ausgibt. Wie bereits für Fig.1 erwähnt, ist es erfindungsgemäß frei überlassen, wie der Status SLS weiterverarbeitet wird.

Fig.4 zeigt eine Ausgestaltung der Sicherheitsüberwachung 10 mit einem Definitionsbaustein 1, einem Berechnungsbaustein 2 und einem Funktionsbausteinen 3. Wie auch bei Fig.3 beschrieben, können die dargestellten Bausteine ineinander integriert sein.

Über den Definitionsbaustein 1 erfolgt die einmalige Definition der seriellen Kinematik 30 zum Beispiel in Form eines Tabellensystems T. Dieses Tabellensystem T enthält die Definition der Gelenke 12 und dessen möglichen Gelenkeigenschaften (Dreh- oder Schubgelenk), der mechanischen Gelenkskopplungen, der Koordinatensysteme, die geometrischen Abmessung der starren Verbindungen 13, also die Abstände von einem Gelenk 12 zum nächsten, die Definition von Hilfskoordinatensystemen, die Werkzeugabmessungen und die zugehörigen Werkzeugarbeitspunkte TCP's, in frei wählbaren Maßeinheiten. Durch das Parametrieren eines erwähnten Hilfskoordinatensystems kann eine zusätzliche Verschiebung und/oder Verdrehung im Raum, unabhängig von einem Gelenk 12, definiert werden. Beispielsweise ist die Montage einer seriellen Kinematik 30 auf einer Hebebühne denkbar. Ist für die serielle Kinematik 30 ein Hilfskoordinatensystem parametriert, kann dessen Bewegung, also die Bewegung der gesamten seriellen Kinematik 30 auf der Hebebühne, wie die Bewegung eines Gelenks 12 überwacht werden.

Es besteht auch die Möglichkeit, mehrere Werkzeugarbeitspunkte TCP's im Tabellensystem T zu definieren. Durch eine mögliche, parallele Überwachung kann beispielsweise von einem Werkzeug 41 auf ein anderes gewechselt werden, ohne die Überwachung deaktivieren zu müssen.

Mithilfe des Tabellensystems T wird vom Definitionsbaustein 1 ein Datenpaket DP erstellt, das die serielle Kinematik 30, für die Sicherheitsüberwachung 10, in Ihrem vollen Umfang beschreibt. Dieses Datenpaket DP wird an den Berechnungsbaustein 2 weitergegeben. Der Definitionsbaustein 1 rechnet bei Bedarf alle im Tabellensystem T erfassten Werte in eine einheitliche Maßeinheit, beispielsweise Millimeter und Radiant, um. Des Weiteren können die eingegebenen Werte auf Plausibilität, also beispielsweise daraufhin, ob eine im Tabellensystem T definierte serielle Kinematik 30 physisch überhaupt möglich ist, geprüft werden. Ist dies nicht der Fall, wird das errechnete Datenpaket DP als ungültig gekennzeichnet und kann somit nicht weiterverarbeitet werden. Auch das Auftreten eines solchen Fehlers kann zu beliebigen Szenarien führen. Beispielsweise wäre das Eingreifen in die Steuerung 20, die die serielle Kinematik 30 in ihrer sicheren Referenzposition festsetzt, oder eine optische, akustische oder ähnliche Ausgabe denkbar.

Wie bereits bei Fig.3 beschrieben wird die aktuelle Achsposition P, die sich zum Beispiel aus dem Positionsfeedback des Gelenksmotors 11 ergibt, in den Berechnungsbaustein 2 eingelesen, die Absolutposition AP des Gelenks 12 berechnet und an den Funktionsbaustein 3 übermittelt. Der Funktionsbaustein 3 berechnet aus der übermittelten Absolutposition AP des Gelenks 12, wie auch bei Fig.3 beispielsweise ausgeführt, als Zustandsgröße dessen Geschwindigkeit und vergleicht diese mit einer gewählten Grenzgeschwindigkeit SL wobei das Vergleichsergebnis wieder in Form eines frei nutzbaren Status, in diesem Fall SLS, ausgegeben wird.

In Fig.5 ist eine mögliche Ausführungsvariante der Sicherheitsüberwachung 10 in einem besonders vorteilhaften Umfang mit dem Definitionsbaustein 1, dem Berechnungsbaustein 2 und mehreren Funktionsbausteinen 3 bis 5 schematisch dargestellt. Die einzelnen Funktionsbausteine 3 bis 5 überwachen dabei unterschiedliche Zustandsgrößen der seriellen kinematik 30. Die genutzten Funktionsbausteine 3 bis 5 stellen, gegebenenfalls in Kombination mit dem Definitionsbaustein 1 und dem Berechnungsbaustein 2, die von der Steuerung 20 der seriellen Kinematik 30 autonome Sicherheitsüberwachung 10 dar. Der Definitionsbaustein 1 erstellt mithilfe des Tabellensystems T ein Datenpaket DP und dieses wird an den Berechnungsbaustein 2 weitergegeben.

Aus dem Datenpaket DP werden durch den Berechnungsbaustein 2 die Rotationsmatrizen M und unter Anwendung der bekannten Vorwärtstransformation die Absolutposition AP des, im Tabellensystem T, definierten Gelenks 12 und des zu überwachende Werkzeuges 41 berechnet. Die Rotationsmatrize M gibt die Orientierung/Verdrehung der Achse eines gelenksbezogenen/gelenksfesten Koordinatensystems relativ zu einem, für die gesamte serielle Kinematik 30 gültigen, arbeitsumgebungsgebundenen, absoluten Koordinatensystems, wie dem globalen Raumkoordinatensystem, an. Unter Verwendung der Rotationsmatrize M wird im Berechnungsbaustein 2 aus der Relativposition P die Absolutposition AP des Gelenks 12 und des zu überwachende Werkzeuges 41 berechnet.

Die errechnete Absolutposition AP wird an den Funktionsbaustein 3 übermittelt, welcher, wie bereits beschrieben, die Geschwindigkeit des zu überwachenden Gelenks 12, oder in gleicher Weise des Werkzeuges 41, berechnet und mit einer gewählten Grenzgeschwindigkeit SL vergleicht.

Der Funktionsbaustein 3 kann verschiedene Grenzgeschwindigkeiten SL, zum Beispiel über mehrere Eingänge, zur Auswahl bieten. Die Auswahl der entsprechenden Grenzgeschwindigkeit SL kann unter Verwendung mehrerer Anforderungseingänge R_{SLS} erfolgten. Als Ausgang liefert der Funktionsbaustein 3 einen Status SLS.

Fig.2 zeigt die Arbeitsumgebung 100 der seriellen Kinematik 30 mit ihren Teilbereichen. Dazu können als Teilbereiche beispielsweise ein Schutzbereich 200 ein Bewegungsbereich 300 und ein Arbeitsbereich 400 für die Überwachung der Gelenke 12, beziehungsweise ihrer Zustandsgrößen, zum Beispiel in Form einer Tabelle TA, beispielsweise vom Benutzer, einer übergeordneten Regeleinheit oder dergleichen, definiert werden, wobei gelten kann:
- Schutzbereich 200: Bereich in dem kein Gelenk 12, eine starre Verbindung 13 zweier Gelenke 12, oder das Werkzeug 41 eindringen darf.
- Bewegungsbereich 300: Bereich der von keinem Gelenk 12, keiner starren Verbindung 13 zweier Gelenke 12, oder dem Werkzeug 41 verlassen werden darf.
- Arbeitsbereich 400: Bereich in dem ein, von der Sicherheitsüberwachung 10 wie ein Gelenk 12 behandeltes, Werkzeug 41 wirkt, beispielsweise trennt, fügt, manipuliert oder dergleichen.

Weiters kann der Arbeitsbereich 400 in mehrere Teilarbeitsbereiche 410, 420 unterteilt werden, welche wiederum zum Beispiel in der Tabelle TA beliebig definiert, beziehungsweise an die vorhandene serielle Kinematik 30 angepasst werden können. In gleicher Weise kann auch der Bewegungsbereich 300 in mehrere Teilbewegungsbereiche unterteilt werden.

Für unterschiedliche Teilarbeitsbereiche 410, 420 können beispielsweise vom Benutzer, einer übergeordneten Regeleinheit oder dergleichen, unterschiedliche Grenzwerte für die zu überwachenden Zustandsgrößen definiert werden, welche über die Anforderungseingänge R der Funktionsbausteine 3, 4, 5 ausgewählt werden können.

Die vom Berechnungsbaustein 2 ausgegebenen Absolutposition AP des zu überwachenden Gelenks 12 und/oder des Werkzeuges 41 werden auch an den Funktionsbaustein 4 übertragen. Durch den Funktionsbaustein 4 wird anhand der Absolutposition AP des Gelenks 12 und/oder des Werkzeuges 41 ermittelt in welchen Bereich der Arbeitsumgebung 100 sich das Gelenk 12 und/oder das Werkzeug 41 befindet.

Für die Absolutposition der seriellen Kinematik stellen die beispielhaft definierten Bereiche 200, 300, 400 und dessen Teilbereiche 410 und 420 entsprechende Grenzwerte da. Im Funktionsbaustein 4 erfolgt der Vergleich der aktuellen Absolutposition AP des Gelenks 12 und/oder des Werkzeugs 41 mit den in der Tabelle TA definierten Bereichen 200, 300, 400 und dessen Teilbereichen 410 und 420. Der Funktionsbaustein 4 liefert im aktivierten Zustand den Status SLP, über den, wie auch beim Status SLS, frei verfügt werden kann. Befindet sich beispielsweise das Gelenk 12 innerhalb des vorhin beschriebenen Schutzbereichs 200 wird dieser Status SLP, im Zuge der Sicherheitsverletzung, auf einen die Verletzung kennzeichnenden Wert gesetzt. Selbiges erfolgt, wenn sich das Gelenk 12 und/oder das Werkzeug 41 weder innerhalb des Bewegungsbereichs 300 beziehungsweise den möglichen Teilbewegungsbereichen, noch innerhalb des Arbeitsbereichs 400 beziehungsweise eines Teilarbeitsbereichs 410, 420 befindet.

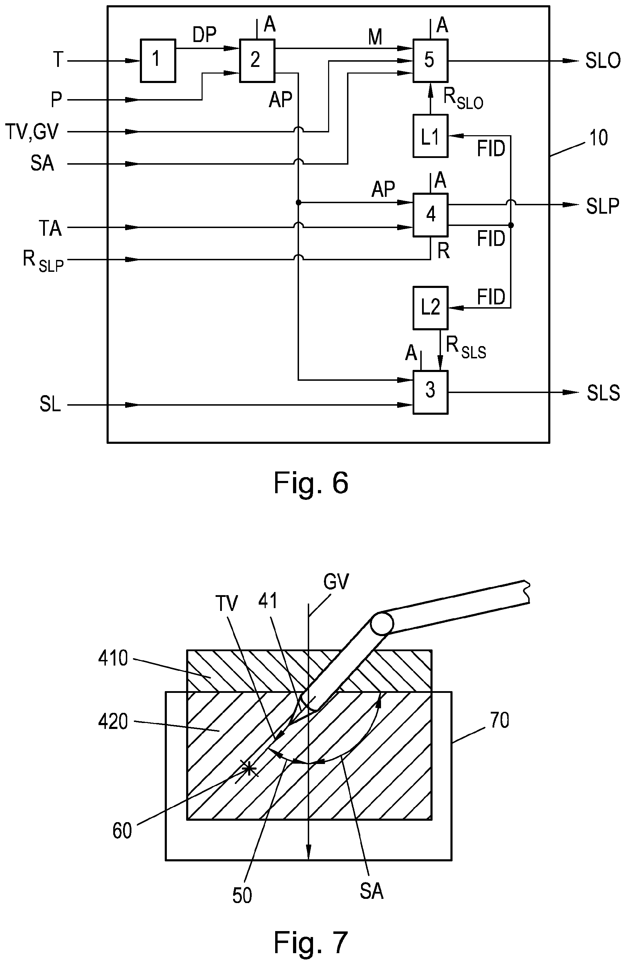

Jeder Teilarbeitsbereich 410, 420 wird durch eine eigene FunktionlD FID gekennzeichnet. Befindet sich das Werkzeug 41 in einem Teilarbeitsbereich 410, 420, kann zum Beispiel auch die FunktionID FID dieses Teilarbeitsbereichs 410, 420 von Funktionsbaustein 4 ausgegeben werden.Die FunktionID FID kann, in einer vorteilhaften Ausführung der Erfindung wie in Fig.6 dargestellt, mithilfe von Logikbausteinen, beispielsweise L1 und L2, dazu verwendet werden, Grenzwerte für die zu überwachenden Zustandsgrößen auszuwählen. Beispielsweise können die Grenzgeschwindigkeit SL, die einen Eingang für Funktionsbaustein 3 darstellt, und der Sicherheitsgrenzwinkel SA, der einen Eingang von Funktionsbaustein 5 darstellt, in Abhängigkeit des Teilarbeitsbereichs 410, 420 in dem sich das Gelenk 12 befindet, über die Anforderungseingänge R_{SLS} und R_{SLO} ausgewählt werden.

Ein Sicherheitsgrenzwinkel SA stellt den maximal zulässigen Winkel 50 zwischen dem globalen Richtungsvektor GV und dem Werkzeugrichtungsvektor TV, in Form eines Kreiskegels um den globalen Richtungsvektor GV, dar. Der globale Richtungsvektor GV wird dabei beliebig definiert, beispielsweise normal auf eine zu bearbeitenden Werkstückoberfläche. Als Werkzeugrichtungsvektor TV kann die Orientierung des Werkzeuges 41, also beispielsweise die Richtung einer ausgekoppelten Laserstrahlung 60, bezeichnet werden, aber auch andere Definitionen für den Werkzeugrichtungsvektor TV, beispielsweise rechtwinklig auf einen Bearbeitungskopf eines Lasers, sind möglich.

Der Funktionsbaustein 5 dient der Überwachung der Werkzeugorientierung, welche insbesondere bei der Verwendung von Strahlwerkzeugen, wie beispielsweise Lasern, an Bedeutung gewinnt. Der Funktionsbaustein 5 vergleicht einen Sicherheitsgrenzwinkel SA, welcher erfindungsgemäß teilarbeitsbereichsabhängig sein kann, mit dem Winkel 50 zwischen dem aktuellen Werkzeugrichtungsvektor TV und dem globalen Richtungsvektor GV. Der Zusammenhang zwischen Sicherheitsgrenzwinkel SA, Werkzeugrichtungsvektor TV und dem globalen Richtungsvektor wird in Fig.7 dargestellt. Ein erwähnter Logikbaustein L1 kann beispielsweise darin bestehen, dass solange sich das Werkzeug 41 im Teilarbeitsbereich 410 befindet, der Winkel 50 zwischen globalen Richtungsvektor GV und Werkzeugrichtungsvektor TV auf einen Sicherheitsgrenzwinkel SA von zum Beispiel 1° beschränkt ist. Sobald das Werkzeug 41 in den Teilarbeitsbereich 420 eindringt, wird der Sicherheitswinkel SA, wie ihn Fig.7 dargestellt, auf zum Beispiel 90° erhöht. Im Zusammenhang mit dem dargestellten globalen Richtungsvektor GV und dem Werkzeugrichtungsvektor TV wird somit wirkungsvoll vermieden, dass ein fokussierter Laserstrahl 60 zum Beispiel eine mögliche, physische Schutzumrandung 70 verlässt.

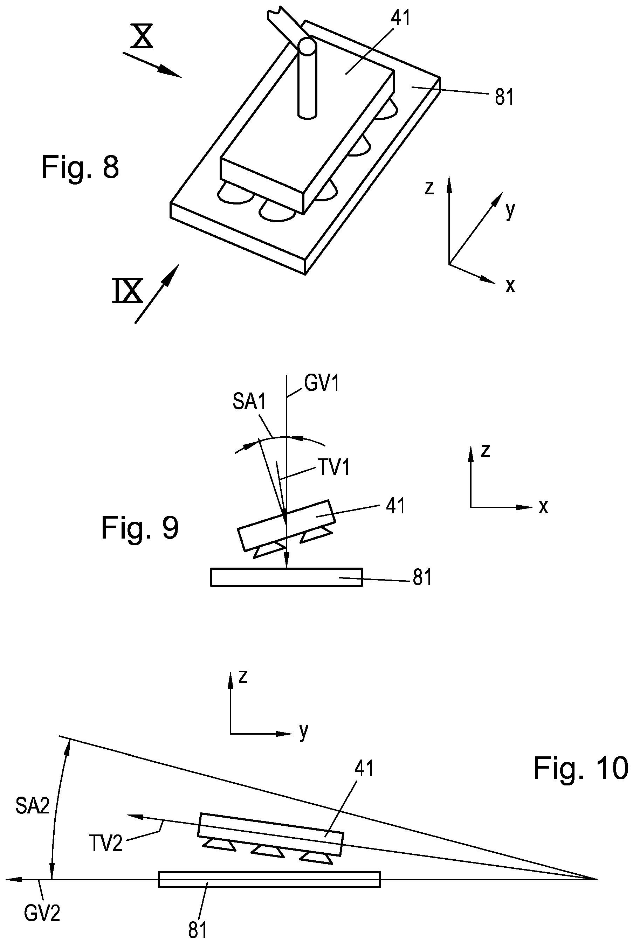

Je nach Anwendung und verwendetem Werkzeug 41 ist es denkbar, dass mehrere Sicherheitswinkel SA überwacht werden müssen. Ein solcher Fall ist in Fig.8, Fig.9 und Fig.10 dargestellt. Fig.8 zeigt beispielsweise, in perspektivischer Ansicht, das Aufnehmen oder Ablegen eines Werkstücks 81 unter Verwendung eines rechteckigen Aufnahmewerkzeuges als Werkzeug 41. GV1 stellt den globalen Richtungsvektor und TV1 den Werkzeugrichtungsvektor dar. Der Sicherheitsgrenzwinkel SA1 stellt den maximal zulässigen Winkel zwischen dem globalen Richtungsvektor GV1 und dem Werkzeugrichtungsvektor TV1 dar.

Bei Definition eines einzelnen Sicherheitsgrenzwinkels SA1 (siehe Fig.9), der für die geringere Dimension des Aufnahmewerkzeuges 41 ausreicht, um im Nahbereich des Werkstückes 81 eine Kollision wirkungsvoll zu vermeiden, kann es beim Verkippen um den gleichen Winkel in Richtung der größeren Dimension des Aufnahmewerkzeuges 41 bereits zu einer Kollision mit dem Werkstück 81 kommen. Aus diesem Grund wird ein zweiter globaler Richtungsvektor GV2 und dazu passend ein zweiter Werkzeugrichtungsvektor TV2 definiert (siehe Fig.10). Diesen beiden Vektorenpaaren kann jeweils ein Sicherheitsgrenzwinkel SA1 und SA2 zugeordnet werden, wodurch sichergestellt wird, dass ein Vekippen des Werkzeuges 41 um die jeweilige Achse auf jenem Bereich eingeschränkt wird, der ein kollisionsfreies Aufnehmen des Werkstückes 81 gewährleistet. Für die Überwachung der beiden Sicherheitsgrenzwinkel SA1 und SA2 können zwei Funktionsbausteine 5, gegebenenfalls mit zwei dazugehörigen Logikbausteinen L1, verwendet werden.

Kommen mehrere Werkzeuge 41 zur Anwendung, so kann jedem Werkzeug ein eigener Funktionsbaustein 5 zugeordnet werden. Zur Bestimmung des aktuellen Winkels 50 zwischen dem Werkzeugrichtungsvektor TV und dem globalen Richtungsvektor GV wird der Werkzeugrichtungsvektor TV mithilfe der Rotationsmatrizen M auf das globale Koordinatensystem bezogen. Die Rotationsmatrizen M stellen somit, neben dem Werkzeugrichtungsvektor TV, dem globalen Richtungsvektor GV und dem Sicherheitsgrenzwinkel SA, eine weitere Eingangsgröße für den Funktionsbaustein 5 dar. Der Funktionsbaustein 5 liefert mit dem Status SLO eine Ausgangsgröße über die wiederum frei verfügt werden kann.

Bis auf den Definitionsbaustein 1, der lediglich das Tabellensystem T zur Definition der seriellen Kinematik 30 beinhaltet, haben alle Bausteine einen Aktiviereingang A. Dieser Eingang kann, beispielsweise vom Benutzer, einer übergeordneten Regeleinheit oder dergleichen, belegt werden, um den Baustein für die Nutzung zu aktivieren. Wird der Eingang auf TRUE "1" gesetzt, ist der Baustein, und somit die Überwachung der entsprechenden Zustandsgröße aktiviert, wobei ein frei wählbar Grenzwert nicht mehr verändert werden kann, solange der entsprechende Funktionsbaustein 3, 4, 5 aktiviert ist. Das zwischenzeitliche Deaktivieren des Berechnungsbausteins 2 oder eines der Funktionsbausteine 3 bis 5, wenn diese für die Sicherheitsüberwachung nicht benötigt werden, hat zufolge, dass Rechenkapazität eingespart wird und somit an anderer Stelle genutzt werden kann. Dabei ist es als selbstverständlich anzusehen, dass der Berechnungsbaustein 2 nicht unabhängig von den Funktionsbausteinen 3, 4, 5 deaktiviert werden kann.

Die beschrieben Sicherheitsüberwachung 10 kann natürlich auch für die Überwachung mehrerer Gelenke 12 und/oder Werkzeuge 41 genutzt werden, wobei die Funktionsbausteine 3, 4, 5 die gleiche Funktion wie bei der Überwachung eines einzelnen Gelenks 12 und/oder Werkzeugs 41 erfüllen.

## Patentansprüche

1. Verfahren zur Sicherheitsüberwachung eines Gelenks (12) einer seriellen Kinematik (30) die unter Kontrolle einer Steuerung (20) Aufgaben verrichtet, wobei zur Sicherheitsüberwachung aus der aktuellen Achsposition (P) des Gelenks (12) eine aktuelle Zustandsgröße des Gelenks (12), wie die Absolutposition (AP) oder ihre Ableitungen nach der Zeit, zyklisch ermittelt und mit einem konfigurierbaren Grenzwert (SA, TA, SL) verglichen wird, wobei ein Funktionsbaustein (3, 4, 5) für die Überwachung der Zustandsgröße verwendet wird und in der Sicherheitsüberwachung (10) die aktuelle Achsposition (P) des Gelenks (12) der seriellen Kinematik (30) unabhängig von ihrer Steuerung (20) erfasst und daraus eine aktuelle Zustandsgröße des Gelenks (12) in der Sicherheitsüberwachung (10) berechnet wird, die aktuelle Zustandsgröße des Gelenks (12) mit ihrem Grenzwert (SA, TA, SL) verglichen wird und das Vergleichsergebnis (SLO, SLP, SLS) von der Sicherheitsüberwachung (10) ausgegeben wird, **dadurch gekennzeichnet, dass** der Funktionsbaustein (3, 4, 5) unabhängig von der Steuerung (20), während eines Bewegungsablaufes der seriellen Kinematik (30), aktiviert oder deaktiviert wird.

2. Verfahren nach Anspruch 1, **dadurch gekennzeichnet, dass** als aktuelle Achsposition (P) das Positionsfeedback eines Gelenksmotors (11) verwendet wird.

3. Verfahren nach Anspruch 1 oder 2, **dadurch gekennzeichnet, dass** die Geometrie der seriellen Kinematik (30), vorteilhaft durch außerhalb der Sicherheitsüberwachung (10) erstellte und an die Sicherheitsüberwachung (10) übergebenen Tabellen (T), definiert wird.

4. Verfahren nach einem der Ansprüche 1 bis 3, **dadurch gekennzeichnet, dass** mehrere Zustandsgrößen eines Gelenks (12) durch Funktionsbausteine (3, 4, 5) überwacht werden, wobei jeder Zustandsgröße ein Funktionsbaustein (3, 4, 5) zugeordnet wird und die Funktionsbausteine (3, 4, 5) unabhängig voneinander aktiviert oder deaktiviert werden.

5. Verfahren nach einem der Ansprüche 1 bis 4, **dadurch gekennzeichnet, dass** für die Arbeitsumgebung (100) der seriellen Kinematik (30) mehrere Teilbereiche (200, 300, 400, 410, 420) für die Überwachung von Zustandsgrößen definiert werden.

6. Verfahren nach Anspruch 5, **dadurch gekennzeichnet, dass** mit definierten Logikbausteinen (L1, L2), Grenzwerte (SA, SL) für die zu überwachenden Zustandsgrößen in Abhängigkeit der Teilbereiche (200, 300, 400, 410, 420) angepasst werden.

7. Verfahren nach einem der Ansprüche 1 bis 6 **dadurch gekennzeichnet, dass** bei der Aktivierung eines Funktionsbausteins (3, 4, 5) unter Nutzung eines Anforderungseingangs (R) zwischen unterschiedlichen Grenzwerten (SA, SL) für die zu überwachende Zustandsgröße ausgewählt wird.

8. Verfahren nach einem der Ansprüche 1 bis 7, **dadurch gekennzeichnet, dass** mehrere Gelenke (12) der seriellen Kinematik (30) gleichzeitig überwacht werden.

9. Sicherheitsüberwachung (10) für ein Gelenk (12) einer seriellen Kinematik (30) die unter Kontrolle einer Steuerung (20) Aufgaben verrichtet, wobei in der Sicherheitsüberwachung (10) ein Eingang für die Übergabe einer aktuellen Achsposition (P) des Gelenks (12) unabhängig von der Steuerung (20) der seriellen Kinematik (30) vorgesehen ist, in der Sicherheitsüberwachung (10) ein Berechnungsbaustein (2) vorgesehen ist, der mit dem Eingang verbunden ist und der ausgebildet ist. aus der aktuellen Achsposition (P) eine aktuelle Zustandsgröße des Gelenks (12) zu berechnen, in der Sicherheitsüberwachung (10) ein von der Steuerung (20) unabhängiger Funktionsbaustein (3, 4, 5) mit einem Grenzwerteingang vorgesehen ist, der ausgebildet ist die aktuelle Zustandsgröße mit einem Grenzwert (SA, TA, SL) zu vergleichen, und das Vergleichsergebnis (SLO, SLP, SLS) an einem Ausgang der Sicherheitsüberwachung (10) ausgibt, **dadurch gekennzeichnet, dass** der Funktionsbaustein (3, 4, 5) einen Aktiviereingang (A) aufweist mit dem der Funktionsbaustein (3, 4, 5) unabhängig von der Steuerung (20), während eines Bewegungsablaufs der seriellen Kinematik (30), zu aktivieren oder deaktivieren ist.

10. Sicherheitsüberwachung (10) nach Anspruch 9, **dadurch gekennzeichnet, dass** das Gelenk (12) der seriellen Kinematik (30) einen Gelenksmotor (11) aufweist der ausgebildet ist die aktuelle Achsposition (P) als Positionsfeedback an einem Ausgang auszugeben, und der Ausgang mit dem Eingang der Sicherheitsüberwachung zur Übermittlung der aktuellen Achsposition (P) an die Sicherheitsüberwachung (10) verbunden ist.

11. Sicherheitsüberwachung (10) nach Anspruch 9 oder 10, **dadurch gekennzeichnet, dass** in der Sicherheitsüberwachung (10) ein Eingang für die Übergabe einer Tabelle (T), die die Geometrie der seriellen Kinematik (30) beinhaltet, vorgesehen ist und in der Sicherheitsüberwachung (10) ein Definitionsbaustein (1) vorgesehen ist, der mit dem Eingang verbunden ist und an den die Tabelle (T) übergeben wird.

12. Sicherheitsüberwachung (10) nach einem der Ansprüche 9 bis 11, **dadurch gekennzeichnet, dass** in der Sicherheitsüberwachung (10) mehrere Funktionsbausteine (3, 4, 5) zur Überwachung mehrerer Zustandsgrößen vorgesehen sind und, dass die Funktionsbausteine (3, 4, 5) über ihre Aktiviereingänge (A) unabhängig voneinander und unabhängig von der Steuerung (20) aktivier und deaktivierbar sind.

13. Sicherheitsüberwachung (10) nach einem der Ansprüche 9 bis 12, **dadurch gekennzeichnet, dass** an den Funktionsbausteinen (3, 4, 5) ein Anforderungseingang (R) vorgesehen ist, über den unterschiedliche Grenzwerte (SA, TA, SL) für die zu überwachenden Zustandsgrößen ausgewählt werden.

14. Sicherheitsüberwachung (10) nach einem der Ansprüche 9 bis 13, **dadurch gekennzeichnet, dass** ein Logikbaustein (L1, L2) vorgesehen ist und die Arbeitsumgebung (100) der seriellen Kinematik (30) in Teilbereiche (200, 300, 400, 410, 420) unterteilt ist, wobei der Logikbaustein (L1, L2) über einen Eingang verfügt, der mit einem Ausgang eines ersten Funktionsbausteins (4) verbunden ist, über den der Teilbereich (200, 300, 400, 410, 420) in dem sich das Gelenk (12) aktuell befindet dem Logikbaustein (L1, L2) mitgeteilt wird, und der Logikbaustein (L1, L2) über einen Ausgang verfügt welcher mit dem Anforderungseingang eines zweiten Funktionsbausteins (3, 5) verbunden ist über den der Grenzwert für die im zweiten Funktionsbaustein (3, 5) zu überwachende Zustandsgröße in Abhängigkeit des Teilbereichs (200, 300, 400, 410, 420) ausgewählt wird.

## Claims

1. A method for safety monitoring of a joint (12) of a serial kinematics (30), which carries out tasks under the control of a control unit (20), wherein for safety monitoring a current state variable of the joint (12), such as the absolute position (AP) or the time derivatives thereof, being determined cyclically from the current axis position (P) of the joint (12) and being compared to a configurable limit value (SA, TA, SL), wherein a function module (3, 4, 5) being used to monitor the state variable and the current axis position (P) of the joint (12) of the serial kinematics (30) being detected in the safety monitoring unit (10) independently of the control unit (20), and based thereon a current state variable of the joint (12) being calculated in the safety monitoring unit (10), the current state variable of the joint (12) being compared to the limit value (SA, TA, SL) thereof and the result of the comparison (SLO, SLP, SLS) being output by the safety monitoring unit (10), **characterized in that** the function module (3, 4, 5) is activated or deactivated independently of the control unit (20) during a sequence of motions of the serial kinematics (30).

2. The method according to claim 1, **characterized in that** the position feedback of a joint motor (11) is used as the current axis position (P).

3. The method according to claim 1 or 2, **characterized in that** the geometry of the serial kinematics (30) is advantageously defined by tables (T) that are created outside the safety monitoring unit (10) and transmitted to the safety monitoring unit (10).

4. The method according to any one of claims 1 to 3, **characterized in that** multiple state variables of a joint (12) are monitored by function modules (3, 4, 5), wherein each state variable being assigned a function module (3, 4, 5) and the function modules (3, 4, 5) being activated or deactivated independently of one another.

5. The method according to any one of claims 1 to 4, **characterized in that** multiple subregions (200, 300, 400, 410, 420) are defined for a work environment (100) of the serial kinematics (30) for monitoring state variables.

6. The method according to claim 5, **characterized in that** limit values (SA, SL) for the state variables to be monitored are adapted as a function of the subregions (200, 300, 400, 410, 420) using defined logic modules (L1, L2).

7. The method according to any one of claims 1 to 6, **characterized in that** a selection is made between different limit values (SA, SL) for the state variable to be monitored upon activation of a function module (3, 4, 5) using a request input (R).

8. The method according to any one of claims 1 to 7, **characterized in that** multiple joints (12) of the serial kinematics (30) are monitored simultaneously.

9. A safety monitoring unit (10) for a joint (12) of a serial kinematics (30), which carries out tasks under the control of a control unit (20), wherein an input for transmitting a current axis position (P) of the joint (12) independently of the control unit (20) of the serial kinematics (30) is provided in the safety monitoring unit (10), in the safety monitoring unit (10) a calculation module (2) is provided, which is connected to the input and is arranged to calculate a current state variable of the joint (12) from the current axis position (P), in the safety monitoring unit (10) a function module (3, 4, 5) is provided, which has a limit value input and is independent of the control unit (20), the function module is arranged to compare the current state variable to a limit value (SA, TA, SL) and to output the result of the comparison (SLO, SLP, SLS) to an output of the safety monitoring unit (10), **characterized in that** the function module (3, 4, 5) comprises an activation input (A), which can be used to activate or deactivate the function module (3, 4, 5) independently of the control unit during a sequence of motions of the serial kinematics (30).

10. The safety monitoring unit (10) according to claim 9, **characterized in that** the joint (12) of the serial kinematics (30) comprises a joint motor (11), which is arranged to output the current axis position (P) as position feedback to an output, and the output is connected to the input of the safety monitoring unit (10) for transmitting the current axis position (P) to the safety monitoring unit (10).

11. The safety monitoring unit (10) according to claim 9 or 10, **characterized in that** an input for transmitting a table (T), which includes the geometry of the serial kinematics (30), is provided in the safety monitoring unit (10), and a definition module (1), which is connected to the input and to which the table (T) is transmitted, is provided in the safety monitoring unit (10).

12. The safety monitoring unit (10) according to any one of claims 9 to 11, **characterized in that** multiple function modules (3, 4, 5) are provided in the safety monitoring unit (10) for monitoring multiple state variables, and the function modules (3, 4, 5) can be activated and deactivated independently of one another and independently of the control unit (20) via their activation inputs (A).

13. The safety monitoring unit (10) according to any one of claims 9 to 12, **characterized in that** a request input (R), via which different limit values (SA, TA, SL) for the state variables to be monitored are selected, is provided at the function modules (3, 4, 5).

14. The safety monitoring unit (10) according to any one of claims 9 to 13, **characterized in that** a logic module (L1, L2) is provided and a work environment (100) of the serial kinematics (30) is subdivided into subregions (200, 300, 400, 410, 420), wherein the logic module (L1, L2) comprises an input that is connected to an output of a first function module (4), via which the subregion (200, 300, 400, 410, 420) in which the joint (12) is presently located is communicated to the logic module (L1, L2), and the logic module (L1, L2) comprises an output that is connected to the request input of a second function module (3, 5), via which the limit value for the state variable to be monitored in the second function module (3, 5) is selected as a function of the subregion (200, 300, 400, 410, 420).

## Revendications

1. Procédé de surveillance de la sécurité d'une articulation (12) d'une cinématique sérielle (30) qui exécute des tâches sous le contrôle d'une commande (20), dans lequel on détermine, pour la surveillance de la sécurité, de manière cyclique, à partir de la position axiale actuelle (P) de l'articulation (12), un paramètre d'état de l'articulation (12), comme la position absolue (AP) ou ses dérivés en fonction du temps, et on le compare à une valeur limite configurable (SA, TA, SL), dans lequel un bloc fonctionnel (3, 4, 5) est utilisé pour la surveillance du paramètre d'état et l'on recueille dans la surveillance de la sécurité (10) la position axiale actuelle (P) de l'articulation (12) de la cinématique sérielle (30) indépendamment de sa commande (20) et l'on en déduit par calcul un paramètre d'état actuel de l'articulation (12) dans la surveillance de la sécurité (10), le paramètre d'état actuel de l'articulation (12) est comparé à sa valeur limite (SA, TA, SL) et le résultat de la comparaison (SLO, SLP, SLS) est délivré par la surveillance de la sécurité (10), **caractérisé en ce que** le bloc fonctionnel (3, 4, 5) est activé ou désactivé indépendamment de la commande (20) au cours d'un processus de déplacement de la cinématique sérielle (30).

2. Procédé selon la revendication 1, **caractérisé en ce que** l'on utilise comme position axiale actuelle (P) la rétroaction de position d'un moteur d'articulation (11).

3. Procédé selon la revendication 1 ou 2, **caractérisé en ce que** la géométrie de la cinématique sérielle (30) est avantageusement définie par des tableaux (T) établis en dehors de la surveillance de sécurité (10) et transférés à la surveillance de sécurité (10).

4. Procédé selon l'une quelconque des revendications 1 à 3, **caractérisé en ce que** plusieurs paramètres d'état d'une articulation (12) sont surveillés par des blocs fonctionnels (3, 4, 5), dans lequel un bloc fonctionnel (3, 4, 5) est affecté à chaque paramètre d'état et les blocs fonctionnels (3, 4, 5) sont activés ou désactivés indépendamment l'un de l'autre.

5. Procédé selon l'une quelconque des revendications 1 à 4, **caractérisé en ce que,** pour l'environnement de travail (100) de la cinématique sérielle (30), plusieurs zones partielles (200, 300, 400, 410, 420) sont définies pour la surveillance de paramètres d'état.

6. Procédé selon la revendication 5, **caractérisé en ce que** des valeurs limites (SA, SL) pour les paramètres d'état à surveiller sont ajustées avec des blocs logiques définis (L1, L2) en fonction des zones partielles (200, 300, 400, 410, 420).

7. Procédé selon l'une quelconque des revendications 1 à 6, **caractérisé en ce que,** lors de l'activation d'un bloc fonctionnel (3, 4, 5) en utilisant une entrée de requête (R), on choisit entre différentes valeurs limites (SA, SL) pour le paramètre d'état à surveiller.

8. Procédé selon l'une quelconque des revendications 1 à 7, **caractérisé en ce que** plusieurs articulations (12) de la cinématique sérielle (30) sont surveillées simultanément.

9. Surveillance de sécurité (10) pour une articulation (12) d'une cinématique sérielle (30) qui exécute des tâches sous le contrôle d'une commande (20), dans laquelle il est prévu dans la surveillance de sécurité (10) une entrée pour le transfert d'une position axiale actuelle (P) de l'articulation (12) indépendamment de la commande (20) de la cinématique sérielle (30), il est prévu dans la surveillance de sécurité (10) un bloc de calcul (2) qui est lié à l'entrée et est conçu pour calculer à partir de la position axiale actuelle (P) un paramètre d'état actuel de l'articulation (12), il est prévu dans la surveillance de sécurité (10) un bloc fonctionnel (3, 4, 5) indépendant de la commande (20) avec une entrée de valeur limite qui est conçue pour comparer le paramètre d'état actuel à une valeur limite (SA, TA, SL) et le résultat de la comparaison (SLO, SLP, SLS) est délivré à une sortie de la surveillance de sécurité (10), **caractérisée en ce que** le bloc fonctionnel (3, 4, 5) présente une entrée d'activation (A) avec laquelle le bloc fonctionnel (3, 4, 5) doit être activé ou désactivé indépendamment de la commande (20) au cours d'un processus de déplacement de la cinématique sérielle (30).

10. Surveillance de sécurité (10) selon a revendication 9, **caractérisée en ce que** l'articulation (12) de la cinématique sérielle (30) présente un moteur d'articulation (11) qui est conçu pour délivrer la position axiale actuelle (P) comme rétroaction de position à une sortie et la sortie est liée à l'entrée de la surveillance de sécurité pour transmettre la position axiale actuelle (P) à la surveillance de sécurité (10).

11. Surveillance de sécurité (10) selon la revendication 9 ou 10, **caractérisée en ce que,** dans la surveillance de sécurité (10), il est prévu une entrée pour la transmission d'un tableau (T), qui contient la géométrie de la cinématique sérielle (30), et il est prévu dans la surveillance de sécurité (10) un bloc de définition (1) qui est lié à l'entrée et auquel le tableau (T) est transféré.

12. Surveillance de sécurité (10) selon l'une quelconque des revendications 9 à 11, **caractérisée en ce que,** dans la surveillance de sécurité (10), il est prévu plusieurs blocs fonctionnels (3, 4, 5) pour surveiller plusieurs paramètres d'état et les blocs fonctionnels (3, 4, 5) peuvent être activés et désactivés via leurs entrées d'activation (A) indépendamment l'un de l'autre et indépendamment de la commande (20).

13. Surveillance de sécurité (10) selon l'une quelconque des revendications 9 à 12, **caractérisée en ce qu'**il est prévu dans les blocs fonctionnels (3, 4, 5) une entrée de requête (R) via laquelle des valeurs limites différentes (SA, TA, SL) sont choisies pour les paramètres d'état à surveiller.

14. Surveillance de sécurité (10) selon l'une quelconque des revendications 9 à 13, **caractérisée en ce qu'**il est prévu un bloc logique (L1, L2) et l'environnement de travail (100) de la cinématique sérielle (30) est subdivisée en zones partielles (200, 300, 400, 410, 420), dans lequel le bloc logique (L1, L2) dispose d'une entrée, qui est liée à une sortie d'un premier bloc fonctionnel (4) via lequel la zone partielle (200, 300, 400, 410, 420) dans laquelle se trouve actuellement l'articulation (12) est transmise au bloc logique (L1, L2) et le bloc logique (L1, L2) dispose d'une sortie qui est liée à l'entrée de requête d'un second bloc fonctionnel (3, 5) via lequel la valeur limite pour le paramètre d'état à surveiller dans le second bloc fonctionnel (3, 5) est choisie en fonction de la zone partielle (200, 300, 400, 410, 420).
